# EUROPEAN PATENT SPECIFICATION

(11) **EP 1 839 926 B1**
(45) Date of publication and mention of the grant of the patent: **18.02.2009**
(21) Application number: 07104925.8
(22) Date of filing: 26.03.2007
(51) Int. Cl.: B60K 15/07, B62D 25/20, B62D 65/04, B62D 43/10

(54) **Method for the manufacture of motor vehicles, and module for support of a combustible gas cylinder for implementation of this method**
Verfahren zur Herstellung von Kraftfahrzeugen und Trägermodul für einen Brenngaszylinder zur Implementierung dieses Verfahrens
Procédé de fabrication de véhicules à moteur, et module de support d'un cylindre de gaz combustible pour la mise en oeuvre de ce procédé

(30) Priority: 28.03.2006 IT TO20060227
(43) Date of publication of application: 03.10.2007
(73) Proprietor: C.R.F. Società Consortile per Azioni, 10043 Orbassano (Torino) (IT)
(72) Inventor: Gobetto, Enrico, 10060 Frossasco (IT)
(74) Representative: Jorio, Paolo

(56) References cited:
- JP-A- 9 290 650
- JP-A- 2000 343 958
- JP-A- 2003 205 754
- US-A1- 2003 189 334

## Description

The present invention relates to a method for the manufacture of motor vehicles. In particular, the present invention refers to a method for the manufacture of motor vehicles which are supplied with combustible gas, which must be equipped with one or more cylinders containing gas.

It is known to produce cylinders with a toroidal shape to contain combustible gas, and to accommodate them in a circular space which is normally provided in the boot or engine compartment in order to carry a spare wheel.

However, these cylinders are not used when the combustible gas is methane, since the pressure of use of this gas is relatively high (approximately 200 bars). In addition, the predefined dimensions of the said circular opening impose an insuperable limit on the dimensions and shape which can be selected for the cylinder to be accommodated, and thus on the maximum quantity of combustible gas which can be carried by the motor vehicle.

In order to eliminate these disadvantages, specific support frames have been designed, based on the shape and dimensions of the gas cylinder selected: these frames are normally accommodated inside the motor vehicle, for example in the boot, such as for example in the United States patent released under number 5,518,272, or are located under the rear floor, as in US 2003/0189334 A1, which discloses a method for the manufacture of motor vehicles and a support module for a combustible gas cylinder according respectively to the preambles of claims 1 and 12.

However, these solutions are also unsatisfactory, since they are relatively large, and take up part of the passenger space and/or the space in the boot.

The object of the present invention is to provide a method for the manufacture of motor vehicles, which makes it possible to solve simply and economically the above-described problems, and preferably requires limited modifications to be made to motor vehicles from normal production which are already commercially available, in order to equip them with the combustible gas cylinders.

According to the present invention, a method is provided for the manufacture of motor vehicles, as defined by claim 1.

The present invention also relates to a support module for a combustible gas cylinder.

According to the present invention, a support module is provided for a combustible gas cylinder, as defined by claim 12.

The invention will now be described with reference to the attached drawings, which illustrate a nonlimiting embodiment of it, in which:
- figure 1 is a view from beneath of a motor vehicle obtained by means of a preferred embodiment of the method according to the present invention;
- figure 2 is a perspective view from above, and shows in exploded form a detail of the motor vehicle in figure 1;
- figure 3 is a perspective view of a portion of floor panel used in the method according to the present invention;
- figure 4 is similar to figure 3, and shows a blank obtained from the portion of floor panel in figure 3, according to a step in the method according to the present invention;
- figure 5 is a perspective view of a further step in the method according to the present invention; and
- figures 6 and 7 are respectively a view from above and a lateral view of a variant of the illustration in figure 5.

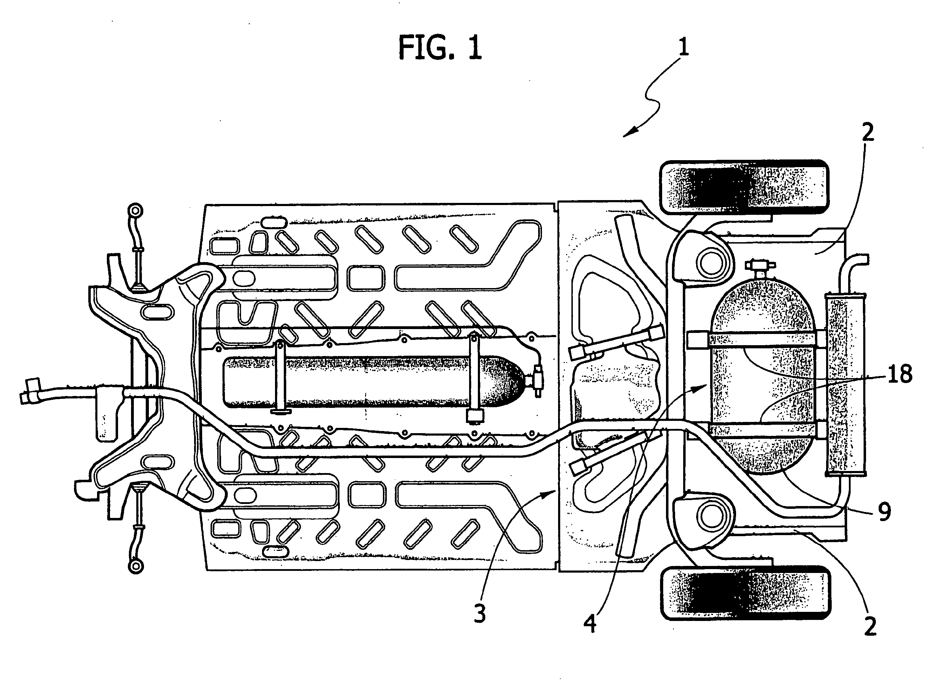

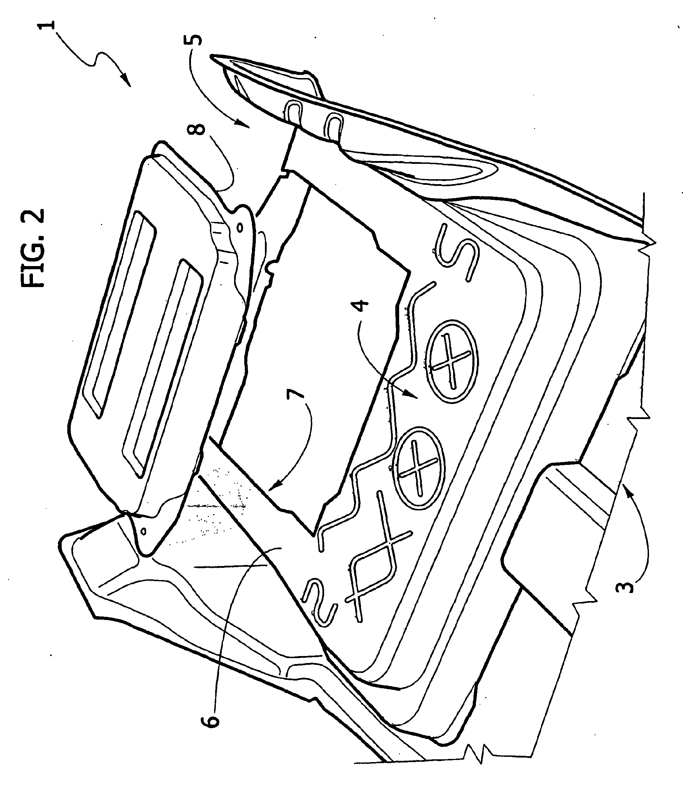

In figures 1 and 2, 1 indicates as a whole a motor vehicle (partially illustrated) comprising a frame or unitised body, comprising for example a pair of longitudinal side members 2. The motor vehicle also comprises a platform or floor panel 3, which is secured to the side members 2, for example by means of welding, and comprises a rear portion 4 which defines the lower support part of a boot 5 (figure 2) which is designed to accommodate luggage.

The portion of floor panel 4 comprises an attachment portion 6 which is secured directly to the side members 2, and has a form in plan view substantially in the shape of a U, in order to define a through opening 7. The portion of floor panel 4 also comprises an indented support portion 8 which defines a part which is separate from the portion 6, and is secured to the portion 6 itself such as to engage the opening 7, and is configured to support a combustible gas cylinder 9.

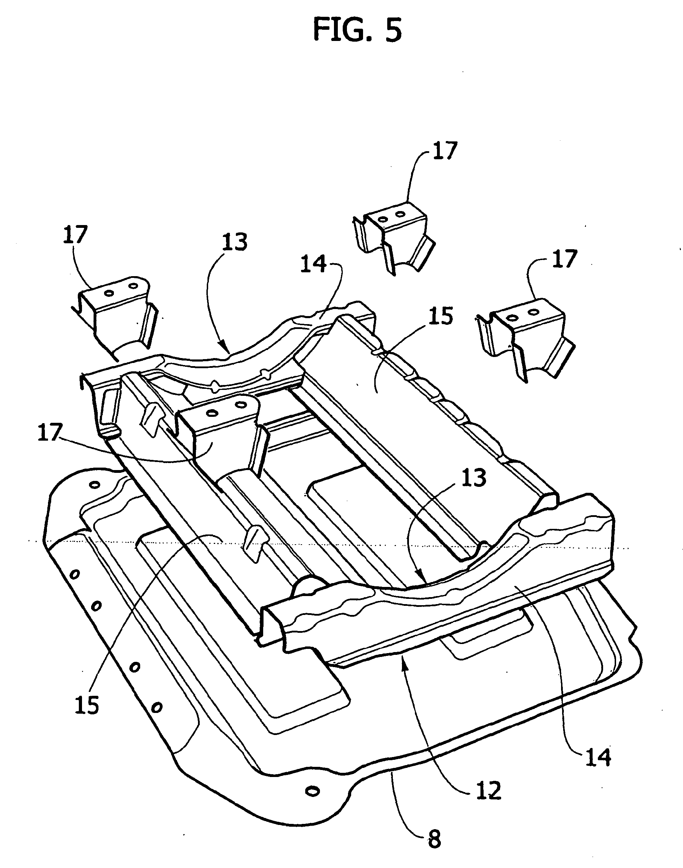

With reference to figures 2 and 5, a frame 12 is disposed beneath the support portion 8, it is secured to the support portion 8, and on the opposite side, it defines a seat 13
which has a shape such as to accommodate partially the cylinder 9.

In particular the frame 12 comprises two side members 14 which are spaced from one another and define the seat 13, and two cross members 15 which connect to one another the ends of the side members 14. The cross members 15 support in a fixed position four brackets 17 for securing of retention belts 18 (figure 1) to be wound around the cylinder 9.

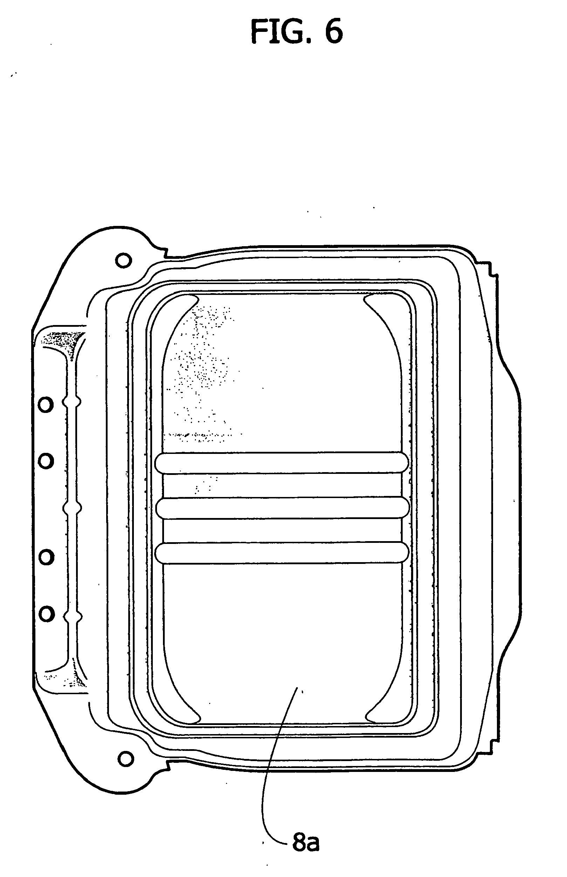

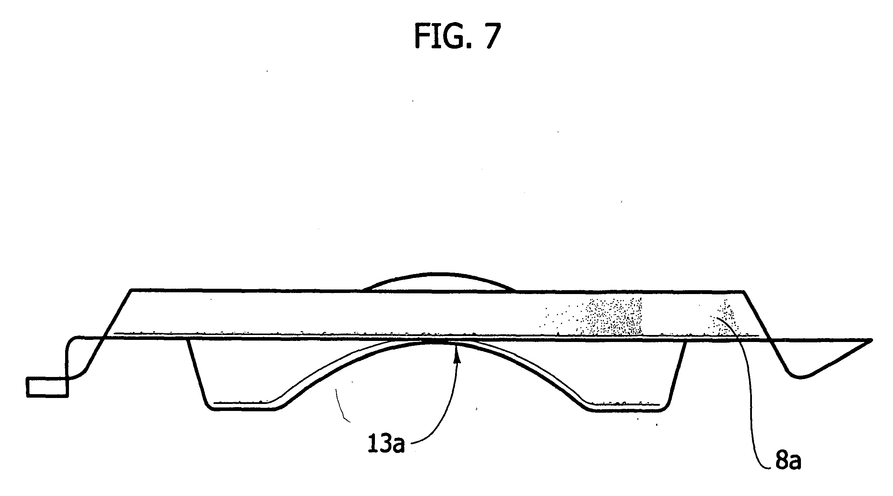

Figures 6 and 7 show a variant of the support portion 8 indicated by the reference number 8a.

The support portion 8a incorporates in a single piece the seat 13 and the brackets 17. In other words, the support portion 8a defines directly a lower seat 13a which is complementary to an upper portion of the cylinder 9, whereas the belts 18 are secured directly to the support portion 8a, for example by means of screws.

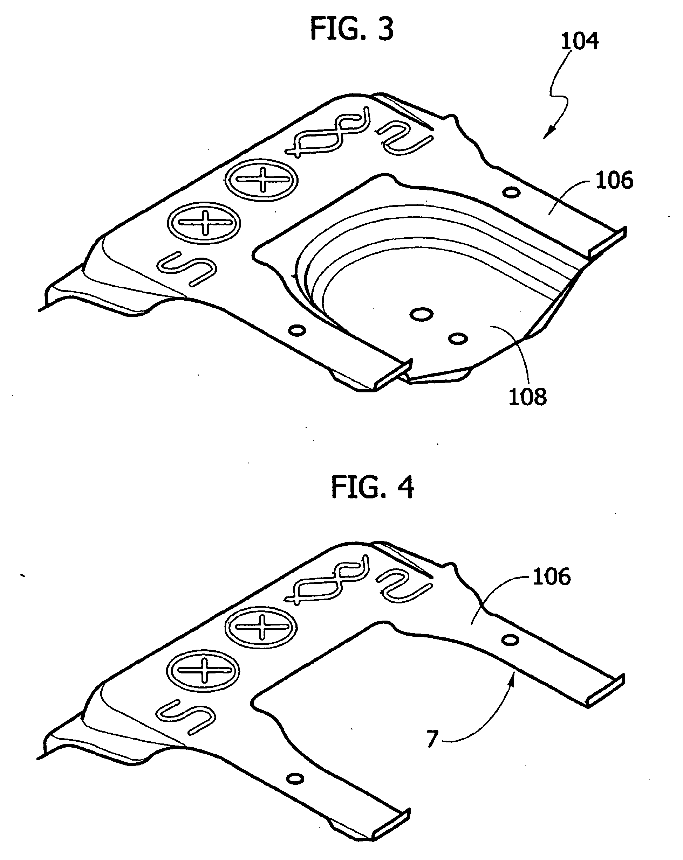

With reference to figures 3 and 4, the portion of floor panel 4 is produced from a portion of floor panel 104 which defines a sheet metal component from normal production, for example for a motor vehicle which is already commercially available, the engine of which is supplied with petrol or diesel.

The portion of floor panel 104 is in a single piece and comprises an attachment portion 106 which coincides with the portion 6, and a support portion 108 which is different
from the portion 8, and defines a seat 113 to accommodate a spare wheel (not illustrated).

In order to produce the portion of floor panel 4, firstly the support portion 108 is removed from the portion 106, for example by means of laser cutting, thus forming the opening 7 and providing the blank shown in figure 4. The portion 8 or 8a, which has previously been produced, is then secured to this blank instead of the portion 108.

For example, the portion 8 or 8a is made of metal material, for example steel, and is secured directly to the portion 106 by means of welding, after having been positioned in a specific reference position.

In particular, the support portion 8 or 8a is produced by means of die forming, for example pot die forming, and by means of subsequent trimming of the perimeter edge 10, for example by means of laser cutting.

According to one alternative, the support portion 8a is made of a thermoplastic material reinforced with glass fibres, for example by means of injection moulding. In this case, the support portion 8a is secured to the portion 106 by means of gluing.

The seat 13a is formed directly in the support portion 8a during the moulding.

On the other hand, for the solution in figures 2 and 5, the frame 12, with the brackets 17, is secured to the support portion 8, for example by means of welding, preferably
before the securing of the support portion 8 on the portion 106.

Finally, the belts 18 are coupled in a fixed position on the portion of floor panel 4, or directly on the support portion 8a, or indirectly on the support portion 8, such as to be able to wind the belts 18 themselves around the cylinder 9, when the cylinder 9 must then be fitted on the motor vehicle 1 along the production line.

In particular, during the manufacture of the motor vehicles, there are available along the production line both portions of floor panel 4 and portions of floor panel 104. As is shown from the foregoing description, these portions of floor panel 4 and 104 can be coupled to the side members 2 as an alternative to one another. Thus, along the production line, if the motor vehicles must be equipped with an engine which is supplied with petrol or diesel, a portion of floor panel 104 is fitted. On the other hand, if the motor vehicles must be equipped with an engine which is supplied with gas, the portion of floor panel 4 is fitted, thus providing for example the embodiment shown in figure 1.

It is apparent from the foregoing description that the method described with reference to the attached figures makes it possible to equip the motor vehicle with a relatively large cylinder 9, without limiting excessively the space in the boot 5, without modifying the side members 2, and altering only minimally the normal production platform which comprises the portion of floor panel 104.

In particular, the above described method makes it possible to obtain a modular system to equip motor vehicles: in fact, along the production line, the portions of floor panel 4 and 104 define respective modules which can be fitted as an alternative to one another in order to complete the platform 3.

Finally, it is apparent from the foregoing description that modifications and variations which do not depart from the field of protection of the present invention can be made to the method described with reference to the attached figures.

In particular, the portions 6, 106 could be connected directly to a further portion of the floor panel or platform 3, instead of to the side members 2; and/or they could have a shape which differs slightly from one another, but always having the same points and systems of attachment so as to be fitted as an alternative to one another or interchangeably, in order to complete the platform 3.

The selection of the portions of floor panel 4 and 104 during production can be carried out automatically by an assembly control programme, and/or the fitting of the portions of floor panel 4, 104 could be robotised. The motor vehicles could be produced with systems other than those of the "in line" type, for example by means of islands.

## Claims

1. Method for the manufacture of motor vehicles, **characterised by** selecting a portion of floor panel from amongst a first (1044) and a second (4) portion of floor panel available along the production line; said first (104) and second (4) portions of floor panel comprising:
- respectively a first (106) and a second (6) attachment portion which are substantially the same as one another and can be coupled to a frame or support body (2) of a motor vehicle as an alternative to one another;
- respectively a first (108) and a second (8) support portion which are different from one another and are secured to the corresponding attachment portions (106,6); the first support portion (108) defining a seat (113) to accommodate a spare wheel; the second support portion (8) being configured such as to support a combustible gas cylinder (9).

2. Method according to claim 1, **characterised in that** said first portion of floor panel (104) is produced in a single piece, and defines part of a motor vehicle from normal production supplied with fuel other than gas.

3. Method according to claim 1 or claim 2, **characterised in that** said second attachment portion (6) is a part separate from said second support portion (8), and defines a through opening (7) which is engaged by said second support portion (8).

4. Method according to claim 3, **characterised in that** said second portion of floor panel (4) is produced from a further first portion of floor panel (104) which is identical to said first portion of floor panel (104).

5. Method according to claim 4, **characterised by** comprising the steps of removing the first support portion (108) from said further first portion of floor panel (104), and of securing said second support portion (8) in the place of the first support portion removed (108).

6. Method according to any one of the preceding claims, **characterised in that** said second support portion (8) is made of metal material.

7. Method according to any one of claims 1 to 5, **characterised in that** said second support portion (8) is made of thermoplastic material reinforced with glass fibres.

8. Method according to any one of the preceding claims, **characterised in that** a retention belt (18) is coupled in a position which is fixed relative to said second support portion (8), such as to be able to wind said retention belt (18) around said combustible gas cylinder (9).

9. Method according to claim 8, **characterised in that** said retention belt (18) is secured directly onto said second support portion (8).

10. Method according to any one of the preceding claims, **characterised in that** a seat (13a) is formed directly in said second support portion (8); said seat (13a) having a shape such as to accommodate partially said combustible gas cylinder (9).

11. Method according to claim 8, **characterised in that** a frame (12) is secured to said second support portion (8): said frame defining a seat (13) which has a shape such as to accommodate partially said combustible gas cylinder (9), and bearing attachment means (17) for said retention belt (18).

12. Support module for a combustible gas cylinder, in particular in order to implement the method defined by claim 3; the support module comprising a portion of floor panel (4) which defines the lower support part of a boot of a motor vehicle; **characterised in that** said portion of floor panel (4) comprises:
- an attachment portion (6) which can be coupled to a frame or body (2) of a motor vehicle as an alternative to another portion of floor panel (104) having a seat (113) to accommodate a spare wheel; and
- a support portion (8) which is fixed relative to the said attachment portion (6) and is configured such as to carry a combustible gas cylinder (9);
said attachment portion (6) being a part which is separate from said support portion (8), and defining a through opening (7) which is engaged by said support portion (8).

13. Support module according to .claim 12, **characterised in that** said support portion (8) is made of metal material.

14. Support module according to claim 12, **characterised in that** said support portion (8) is made of thermoplastic material reinforced with glass fibres.

15. Support module according to any one of claims 12 to 14, **characterised by** comprising a detention belt (18) which is coupled in a position which is fixed relative to said support portion (8), such as to be able to wind said retention belt (18) around said combustible gas cylinder (9).

16. Support module according to claim 15, **characterised in that** said retention belt (18) is secured directly to said support portion (8).

17. Support module according to any one of claims 12 to 16, **characterised in that** said support portion (8) defines directly a lower seat (13a) with a shape such as to accommodate an upper portion of said combustible gas cylinder (9).

18. Support module according to claim 15, **characterised by** additionally comprising a frame (12), which
- is located beneath said support portion (8);
- is secured to said support portion (8),
- defines a seat (13) having a shape such as to accommodate partially said combustible gas cylinder (9), and
- bears attachment means (17) for said retention belt (18).

## Patentansprüche

1. Verfahren zum Herstellen von Kraftfahrzeugen, **gekennzeichnet durch** das Auswählen eines Abschnittes eines Bodenpanels aus einem ersten (104) und einem zweiten (4) Abschnitt des längs der Produktionslinie zur Verfügung stehenden Bodenpanels; wobei der erste (104) und der zweite (4) Abschnitt des Bodenpanels umfasst:
- jeweils einen ersten (106) und einen zweiten (6) Befestigungsabschnitt, die im Wesentlichen gleich sind und mit einem Rahmen oder Trägeraufbau (2) eines Kraftfahrzeuges als Alternative zueinander verbunden werden können;
- jeweils einen ersten (108) und einen zweiten (8) Trägerabschnitt, die voneinander unterschiedlich sind und mit dem entsprechenden Befestigungsabschnitt (106, 6) befestigt werden; wobei der erste Trägerabschnitt (108) eine Aufnahme (113) zum Unterbringen eines Ersatzrades festlegt, und der zweite Trägerabschnitt (8) zum Tragen eines Brenngaszylinders (9) ausgebildet ist.

2. Verfahren nach Anspruch 1, **dadurch gekennzeichnet, dass** der erste Abschnitt des Bodenpanels (104) einteilig hergestellt ist und ein Bauteil eines aus normaler Produktion stammenden Kraftfahrzeuges, das mit Ausnahme von Gas mit Kraftstoff versorgt wird, festlegt.

3. Verfahren nach Anspruch 1 oder 2, **dadurch gekennzeichnet, dass** der zweite Befestigungsabschnitt (6) ein von dem zweiten Trägerabschnitt (8) getrenntes Bauteil ist und eine Durchgangsöffnung (7) festlegt, die in Eingriff mit dem zweiten Trägerabschnitt (8) gebracht wird.

4. Verfahren nach Anspruch 3, **dadurch gekennzeichnet, dass** der zweite Abschnitt des Bodenpanels (4) aus einem weiteren ersten Abschnitt des Bodenpanels (104), der identisch zu dem ersten Abschnitt des Bodenpanels (104) ist, hergestellt wird.

5. Verfahren nach Anspruch 4, **gekennzeichnet durch** die Schritte des Entfernens des ersten Trägerabschnittes (108) von dem weiteren ersten Abschnitt des Bodenpanels (104) und des Befestigens des zweiten Trägerabschnittes (8) an der Stelle des entfernten ersten Trägerabschnittes (108).

6. Verfahren nach einem der vorhergehenden Ansprüche, **dadurch gekennzeichnet, dass** der zweite Trägerabschnitt (8) aus Metall hergestellt wird.

7. Verfahren nach einem der Ansprüche 1 bis 5, **dadurch gekennzeichnet, dass** der zweite Trägerabschnitt (8) aus einem mit Glasfasern verstärkten thermoplastischen Material hergestellt wird.

8. Verfahren nach einem der vorhergehenden Ansprüche, **dadurch gekennzeichnet, dass** ein Haltegurt (18) in einer Position befestigt wird, die relativ zu dem zweiten Trägerabschnitt (8) fixiert ist, um so den Haltegurt (18) um den Brenngaszylinder (9) aufzuziehen.

9. Verfahren nach Anspruch 8, **dadurch gekennzeichnet, dass** der Haltegurt (18) direkt auf dem zweiten Trägerabschnitt (8) befestigt wird.

10. Verfahren nach einem der vorhergehenden Ansprüche, **dadurch gekennzeichnet, dass** eine Aufnahme (13a) direkt in dem zweiten Trägerabschnitt (8) gebildet wird, wobei die Aufnahme (13a) eine Form zum teilweise Aufnehmen des Brenngaszylinders (9) aufweist.

11. Verfahren nach Anspruch 8, **dadurch gekennzeichnet, dass** ein Rahmen (12) an dem zweiten Trägerabschnitt (8) befestigt wird, wobei der Rahmen eine Aufnahme (13) festlegt, die eine Form zum teilweise Aufnehmen des Brenngaszylinders (9) aufweist und Befestigungsmittel (17) für den Haltegurt (18) umfasst.

12. Trägermodul für einen Brenngaszylinder, insbesondere um das im Anspruch 3 festgelegte Verfahren umzusetzen, wobei das Trägermodul einen Abschnitt eines Bodenpanels (4) aufweist, das den unteren Trägerabschnitt eines Kofferraums eines Kraftfahrzeuges festlegt, **dadurch gekennzeichnet, dass** der Abschnitt des Bodenpanels (4) umfasst:
- einen Befestigungsabschnitt (6), der mit einem Rahmen oder einer Karosserie (2) eines Kraftfahrzeuges als Alternative zu einem weiteren Abschnitt des Bodenpanels (104), das eine Aufnahme (113) zum Unterbringen eines Ersatzrades aufweist, verbunden werden kann; und
- einen Trägerabschnitt (8), der relativ zu dem Befestigungsabschnitt (6) fixiert ist und zum Tragen eines Brenngaszylinders (9) ausgebildet ist;
wobei der Befestigungsabschnitt (6) ein von dem Trägerabschnitt (8) getrenntes Bauteil ist und eine Durchgangsöffnung (7) festlegt, die sich im Eingriff mit dem Trägerabschnitt (8) befindet.

13. Trägermodul nach Anspruch 12, **dadurch gekennzeichnet, dass** der Trägerabschnitt (8) aus Metall hergestellt ist.

14. Trägermodul nach Anspruch 12, **dadurch gekennzeichnet, dass** der Trägerabschnitt (8) aus einem mit Glasfasern verstärkten thermoplastischen Material hergestellt ist.

15. Trägermodul nach einem der Ansprüche 12 bis 14, **dadurch gekennzeichnet, dass** es einen Haltegurt (18) aufweist, der in einer Position verbunden ist, die relativ zu dem Trägerabschnitt (8) fixiert ist, um so den Haltegurt (18) um den Brenngaszylinder (9) aufziehen zu können.

16. Trägermodul nach Anspruch 15, **dadurch gekennzeichnet, dass** der Haltegurt (18) direkt mit dem Trägerabschnitt (8) befestigt ist.

17. Trägermodul nach einem der Ansprüche 12 bis 16, **dadurch gekennzeichnet, dass** der Trägerabschnitt (8) direkt eine untere Aufnahme (13a) mit einer Form zum Unterbringen eines oberen Abschnittes des Brenngaszylinders (9) festlegt.

18. Trägermodul nach Anspruch 15, **dadurch gekennzeichnet, dass** es zusätzlich einen Rahmen (12) aufweist, der
- unterhalb des Trägerabschnittes (8) angeordnet ist;
- mit dem Trägerabschnitt (8) befestigt ist,
- eine Aufnahme (13) mit einer Form zum teilweise Unterbringen des Brenngaszylinders (9) festlegt, und
- Befestigungsmittel (17) für den Haltegurt (18) umfasst.

## Revendications

1. Procédé de fabrication de véhicules à moteur, **caractérisé par** la sélection d'une partie de panneau de plancher entre une première (1044) et une seconde (4) parties de panneau de plancher disponibles le long de la chaîne de production ; lesdites première (104) et seconde (4) parties de panneau de plancher comprenant :
- respectivement une première (106) et une seconde (6) parties de fixation sensiblement identiques l'une à l'autre et pouvant être couplées à un châssis ou à un corps de support (2) d'un véhicule à moteur comme alternative l'une par rapport à l'autre ;
- respectivement une première (108) et une seconde (8) parties de support différentes l'une de l'autre et fixées aux parties de fixation correspondantes (106, 6) ; la première partie de support (108) définissant un siège (113) destiné à recevoir une roue de secours ; la seconde partie de support (8) étant configurée de manière à supporter un cylindre de gaz combustible (9).

2. Procédé selon la revendication 1, **caractérisé en ce que** ladite première partie de panneau de plancher (104) est fabriquée d'une seule pièce, et définit une partie d'un véhicule à moteur de fabrication normale alimentée avec un carburant autre que le gaz.

3. Procédé selon la revendication 1 ou la revendication 2, **caractérisé en ce que** ladite seconde partie de fixation (6) est une partie distincte de ladite seconde partie de support (8), et définit une ouverture traversante (7) dans laquelle vient s'engager ladite seconde partie de support (8).

4. Procédé selon la revendication 3, **caractérisé en ce que** ladite seconde partie de panneau de plancher (4) est fabriquée à partir d'une autre première partie de panneau de plancher (104) qui est identique à ladite première partie de panneau de plancher (104).

5. Procédé selon la revendication 4, **caractérisé en ce qu'**il comprend les étapes consistant à enlever la première partie de support (108) de ladite autre première partie de panneau de plancher (104), et à fixer ladite seconde partie de support (8) à la place de la première partie de support enlevée (108).

6. Procédé selon l'une quelconque des revendications précédentes, **caractérisé en ce que** ladite seconde partie de support (8) est constituée de matériau métallique.

7. Procédé selon l'une quelconque des revendications 1 à 5, **caractérisé en ce que** ladite seconde partie de support (8) est constituée de matériau thermoplastique renforcé de fibres de verre.

8. Procédé selon l'une quelconque des revendications précédentes, **caractérisé en ce qu'**une courroie de rétention (18) est couplée dans une position fixe par rapport à ladite seconde partie de support (8), de sorte que ladite courroie de rétention (18) peut être enroulée autour dudit cylindre de gaz combustible (9).

9. Procédé selon la revendication 8, **caractérisé en ce que** ladite courroie de rétention (18) est fixée directement sur ladite seconde partie de support (8).

10. Procédé selon l'une quelconque des revendications précédentes, **caractérisé en ce qu'**un siège (13a) est formé directement dans ladite seconde partie de support (8) ; ledit siège (13a) ayant une forme lui permettant de recevoir partiellement ledit cylindre de gaz combustible (9).

11. Procédé selon la revendication 8, **caractérisé en ce qu'**un cadre (12) est fixé à ladite seconde partie de support (8) ; ledit cadre définissant un siège (13) ayant une forme lui permettant de recevoir partiellement ledit cylindre de gaz combustible (9) et comportant des moyens de fixation (17) pour ladite courroie de rétention (18).

12. Module de support pour un cylindre de gaz combustible, destiné en particulier à mettre en oeuvre le procédé défini par la revendication 3 ; le module de support comprenant une partie de panneau de plancher (4) qui définit la partie de support inférieure d'un coffre d'un véhicule à moteur ; **caractérisé en ce que** ladite partie de panneau de plancher (4) comprend :
- une partie de fixation (6) pouvant être couplée à un châssis ou un corps (2) d'un véhicule à moteur comme alternative à une autre partie de panneau de plancher (104) comportant un siège (113) pour recevoir une roue de secours ; et
- une partie de support (8) fixe par rapport à ladite partie de fixation (6) et configurée de manière à porter un cylindre de gaz combustible (9) ;
ladite partie de fixation (6) étant une pièce séparée de ladite partie de support (8), et définissant une ouverture traversante (7) dans laquelle vient s'engager ladite partie de support (8).

13. Module de support selon la revendication 12, **caractérisé en ce que** ladite partie de support (8) est constituée de matériau métallique.

14. Module de support selon la revendication 12, **caractérisé en ce que** ladite partie de support (8) est constituée de matériau thermoplastique renforcé de fibres de verre.

15. Module de support selon l'une quelconque des revendications 12 à 14, **caractérisé en ce qu'**il comprend une courroie de rétention (18) couplée dans une position fixe par rapport à ladite partie de support (8), de sorte que ladite courroie de rétention (18) peut être enroulée autour dudit cylindre de gaz combustible (9).

16. Module de support selon la revendication 15, **caractérisé en ce que** ladite courroie de rétention (18) est fixée directement sur ladite seconde partie de support (8).

17. Module de support selon l'une quelconque des revendications 12 à 16, **caractérisé en ce** ladite partie de support (8) définit directement un siège inférieur (13a) ayant une forme lui permettant de recevoir une partie supérieure dudit cylindre de gaz combustible (9).

18. Module de support selon la revendication 15, **caractérisé en ce qu'**il comprend en outre un cadre (12) qui :
- est situé sous ladite partie de support (8) ;
- est fixé à ladite partie de support (8) ;
- définit un siège (13) ayant une forme lui permettant de recevoir partiellement ledit cylindre de gaz combustible (9), et
- comporte des moyens de fixation (17) pour ladite courroie de rétention (18).
